# EUROPÄISCHE PATENTSCHRIFT

(11) **EP 2 289 728 B1**
(45) Veröffentlichungstag und Bekanntmachung des Hinweises auf die Patenterteilung: **09.09.2015**
(21) Anmeldenummer: 10172830.1
(22) Anmeldetag: 13.08.2010
(51) Int. Cl.: B60K 6/10, F16D 5/00, F16H 33/14

(54) **Vorrichtung zur Zurückgewinnung von Bremsenergie**
Device for recovering brake energy
Dispositif de récupération d'énergie de freinage

(30) Priorität: 14.08.2009 DE 102009026381
(43) Veröffentlichungstag der Anmeldung: 02.03.2011
(73) Patentinhaber: Freiherr von Falkenhausen, Adolf, 64380 Rossdorf (DE)
(72) Erfinder: Freiherr von Falkenhausen, Adolf, 64380 Rossdorf (DE)
(74) Vertreter: Katscher Habermann Patentanwälte

(56) Entgegenhaltungen:
- DE-A1- 3 011 833
- DE-A1- 3 014 108
- FR-A1- 2 645 932
- GB-A- 780 200

## Beschreibung

Die Erfindung betrifft eine Vorrichtung zur Rückgewinnung von Bremsenergie während des Abbremsens einer in Bewegung befindlichen trägen Masse, um die Bremsenergie mindestens teilweise in mechanische Energie umzuwandeln und zu speichern, mit einem Schwungrad, welches über ein Getriebe mit der trägen Masse in Wirkverbindung steht.

Eine derartige Vorrichtung ist beispielsweise in DE 30 11 833 A beschrieben worden.

Aus der Praxis sind verschiedene Verfahren und Vorrichtungen bekannt, die jeweils dazu verwendet werden können, während eines Bremsvorgangs beispielsweise eines Kraftfahrzeugs zumindest einen Anteil der üblicherweise in nichtnutzbare Energie umgewandelten kinetischen Energie in eine speicherbare und erneut nutzbringend verwendbar Energieform umzuwandeln. Bereits seit vielen Jahren wird versucht, Bremsenergie mindestens teilweise in Drehenergie eines auf dem Fahrzeug mitgeführten Schwungrads umzuwandeln und über einen längeren Zeitraum zu speichern, so dass beispielsweise ein anschließendes erneutes Anfahren des Fahrzeugs von dem Schwungrad unterstützt werden kann.

Obwohl bereits seit vielen Jahren erfolgversprechende Prototypen existieren und auch Erfahrungen aus praxisnahen Versuchen und umfangreichen Einsätzen beispielsweise im öffentlichen Nahverkehr gewonnen werden konnten, sind derzeit wohl aus Sicherheitsgründen und auf Grund einer als ungenügend empfundenen Effizienz der Energierückgewinnung keine serienreifen Vorrichtungen zur Umwandlung und Speicherung von Bremsenergie in mechanische Drehenergie bekannt.

Als eine erfolgversprechende Alternative werden derzeit bereits Verfahren und Vorrichtungen zum Einsatz gebracht, bei denen Bremsenergie mindestens teilweise in elektrische Energie umgewandelt und gespeichert werden kann, die ihrerseits einen Beschleunigungsvorgang während eines anschließenden Anfahrens des Kraftfahrzeugs unterstützen kann. Geeignete Wandler-Einrichtungen und elektrische Energiespeicher sind so hinsichtlich ihrer Eigenschaften und Kosten-Nutzen-Effizienz bereits geeignet für eine massenhafte Verwendung bei Kraftfahrzeugen, jedoch oftmals mit einem erheblichen Herstellungsaufwand verbunden. Zudem sind die bekannten elektrischen Systeme zur Rückgewinnung von Bremsenergie hinsichtlich der maximalen Leistungsaufnahme durch die verwendeten elektrischen Komponenten, beispielsweise die Generatoren, beschränkt und können nur innerhalb enger Grenzen die Bremsenergie in nutzbare Energie umwandeln. Auch bei der EnergieRückgewinnung bei Aufzügen oder Lasten-Hubvorrichtungen oder anderen Systemen mit häufig bewegten trägen Massen existieren in der Praxis üblicherweise vergleichbare Beschränkungen, welche eine effiziente Umwandlung und Nutzung der Bremsenergie erschweren.

Als Bremsenergie wird dabei grundsätzlich jedwede kinetische Energie angesehen, die bei einer Abbremsung einer trägen Masse, beispielsweise eines Fahrzeugs, üblicherweise in nicht nutzbare Energie wie beispielsweise Wärmeenergie umgewandelt wird. Da insbesondere im innerstädtischen Verkehr ein häufiges Abbremsen und erneutes Anfahren erfolgen muss, könnte bereits eine Rückgewinnung eines kleinen Anteils der ansonsten nicht nutzbaren Bremsenergie bewirken, dass der Kraftstoffverbrauch von Kraftfahrzeugen gesenkt und deren Energiebilanz erheblich verbessert werden könnte.

Eine Schwierigkeit bei der Umwandlung von Bremsenergie in mechanische Energie, insbesondere in Drehenergie, bzw. Rotationsenergie, besteht darin, dass die Umwandlung der Bremsenergie sowohl von dem Betrag und der Differenz der dabei involvierten, bzw. umgesetzten kinetischen Energie und insbesondere von der Drehzahl einer Radachse des Fahrzeugs, als auch von dem verwendeten mechanischen Energiespeicher wie beispielsweise dem Schwungrad und dessen aktueller Drehzahl abhängig ist. Eine Vorrichtung zur Rückgewinnung von Bremsenergie benötigt demzufolge ein geeignetes Getriebe, mittels dessen die in mechanische Energie umgewandelte Bremsenergie in geeigneter Weise dem mechanischen Energiespeicher zugeführt werden kann. Die aus der Praxis bekannten Wandler-Einrichtungen und Getriebe sind entweder mit einem hohen konstruktiven und kostenintensiven Aufwand verbunden oder aber auf einen vorgegebenen Bereich von Drehzahlen bzw. Bereichen von kinetischer und mechanischer Energie beschränkt.

Es wird deshalb als eine Aufgabe der vorliegenden Erfindung angesehen, eine Vorrichtung der eingangs genannten Gattung zur Rückgewinnung von Bremsenergie so auszugestalten, dass mit möglichst einfachen Mitteln Bremsenergie zuverlässig und effizient in Drehenergie eines Schwungrads umgewandelt bzw. übertragen werden kann, wobei die aktuelle Drehzahl des Schwungrads einen möglichst geringen Einfluss auf die Rückgewinnung der Bremsenergie haben soll.

Diese Aufgabe wird erfindungsgemäß dadurch gelöst, dass eine Vorrichtung der eingangs genannten Gattung ein Getriebe mit zwei Planetengetrieben aufweist, die drehfest miteinander verbundene Sonnenräder und Hohlräder und einen voneinander abweichenden Umfang der jeweiligen Planetenräder aufweisen, und dass die Vorrichtung eine zwischen der trägen Masse und dem Getriebe angeordnete Wandler-Einrichtung zur Umwandlung der Bremsenergie in eine Drehmomentfolge aufweist, wobei die Wandler-Einrichtung einen nicht rotationssymmetrischen Drehkörper aufweist, der mit einem senkrecht zu einer Drehachse des Drehkörpers auslenkbaren Drehmomentänderungskörper in Wirkverbindung bringbar ist, und wobei die Wandler-Einrichtung mit dem Getriebe in Wirkverbindung steht und dessen Drehenergie verändern kann, um die Änderung der Drehenergie des Getriebes mindestens teilweise auf das Schwungrad zu übertragen und eine Änderung der in dem Schwungrad gespeicherten Drehenergie zu bewirken.

Während eines Bremsvorgangs wird die kinetische Energie des Fahrzeugs üblicherweise kontinuierlich reduziert. Untersuchungen haben ergeben, dass eine effiziente und zuverlässige Umwandlung und Übertragung der Bremsenergie auf ein Schwungrad dadurch ermöglicht bzw. begünstigt wird, dass die während eines Bremsvorgangs üblicherweise kontinuierlich in Wärmeenergie umgewandelte Bremsenergie zunächst in eine Folge von mehreren, in kurzen zeitlichen Abständen aufeinander folgenden Drehmomentstöße umgewandelt wird, die ihrerseits auf das mit dem Schwungrad in Wirkverbindung stehende Getriebe einwirken und über das Getriebe die in dem Schwungrad gespeicherte Drehenergie erhöhen können.

Als Drehmomentstoß wird dabei im Folgenden ein kurzzeitig auf ein rotierendes System wie beispielsweise das Getriebe oder das Schwungrad einwirkendes Drehmoment bezeichnet. Die Dauer des Drehmomentstoßes soll dabei in Abhängigkeit von den Drehzahlen und den Drehenergien der rotierenden Systeme, auf welche der Drehmomentstoß einwirkt, ausreichend gering sein, um eine Anpassung der jeweiligen Drehzahl und eine damit einhergehende Änderung der Drehenergie zu ermöglichen, bevor ein nachfolgender Drehmomentstoß auf das rotierende System bzw. auf das Getriebe einwirkt. Die zeitliche Abfolge von nacheinander auf das Getriebe einwirkenden Drehmomentstößen kann so vorgegeben werden, dass ein quasi-kontinuierliches Drehmoment erzeugt wird und über das Getriebe eine Erhöhung der in dem Schwungrad gespeicherten Drehenergie bewirkt. Es hat sich jedoch gezeigt, dass die Erzeugung einzelner Drehmomentstöße außerordentlich wichtig für die Energieübertragung ist und die Zeitdauer zwischen einzelnen Drehmomentstößen, bzw. die stoßfreie Zeit zwischen aufeinanderfolgenden Drehmomentstößen ausreichend groß sein sollte, um eine trägheitsbedingte Verzögerung der Stoßwirkung auf das Getriebe ausgleichen und die Drehzahlen der rotierenden Getriebeelemente wieder anpassen zu können, bevor der nächste Drehmomentstoß auf das Getriebe einwirkt,

Durch die Verwendung eines Drehkörpers, der mit einer drehmomentübertragenden Antriebs- oder Abtriebswelle des Getriebes oder mit der zugeordneten Welle des Schwungrads drehfest verbunden ist und mit einem Drehmomentänderungskörper in Wirkverbindungs gebracht werden kann, kann bei Bedarf in einfacher Weise und ausschließlich mechanisch eine Rotationsbewegung in eine Folge von Drehmomentstößen umgewandelt werden. Diese Drehmomentstöße können wiederum auf das Getriebe einwirken und dabei mit jedem Drehmomentstoß ein Drehmoment auf das Getriebe übertragen. Durch die Erzeugung diskreter Drehmomentstöße wird eine weitreichende und für die praktische Anwendung ausreichende Entkopplung der Drehzahlen des Getriebes und des Schwungrads ermöglicht und gleichzeitig eine effektive Übertragung eines Drehmoments als Summe vieler einzelner Drehmomentstöße gewährleistet.

Der Antriebsstrang des Getriebes ist mit einem Planetensteg des einen Planetengetriebes und der Abtriebsstrang des Getriebes mit einem Planetensteg des anderen Planetengetriebes verbunden. Durch die drehfest miteinander verbundenen Sonnenräder und Hohlräder werden gleiche Drehzahlen der Sonnenräder bzw. der Hohlräder der beiden Planetengetriebe vorgegeben. Die Sonnenräder und die Hohlräder sind dabei frei drehbeweglich gelagert, so dass sich die Drehzahlen der Sonnenräder und Hohlräder in Abhängigkeit von den Drehzahlen des Antriebs- und Abtriebsstrangs sowie in Abhängigkeit von dem auf das Getriebe einwirkenden Drehmomentstößen frei einstellen können.

Durch den unterschiedlichen Umfang der jeweiligen Planetenräder und damit einhergehend auch der jeweiligen Sonnenräder wird ein von 1 deutlich abweichendes Übersetzungsverhältnis vorgegeben, so dass eine Kraftübertragung durch das Getriebe auf zwei unterschiedlichen Wegen mit unterschiedlichem Übersetzungsverhältnis erfolgen kann, um eine Entkoppelung der an dem Abtriebsstrang und an dem Antriebsstrang des Getriebes vorherrschenden Drehzahlen zu ermöglichen. Mit Übersetzung wird dabei jede Änderung der Drehzahl bezeichnet, so dass auch eine tatsächlich bewirkte Verminderung der Drehzahl, bzw. eine Untersetzung denkbar ist.

Eine konstruktiv einfache Ausgestaltung des Getriebes kann dadurch erreicht werden, dass die beiden Planetengetriebe ein gemeinsames Hohlrad aufweisen. Die beiden Sonnenräder, die einen jeweils an die zugeordneten Planetenräder angepassten, voneinander abweichenden Umfang aufweisen, sind über eine starre Mittelachse miteinander drehfest verbunden. Jedes Planetengetriebe weist mindestens zwei, vorzugsweise jedoch drei oder mehr Planetenräder in einer axialsymmetrischen Anordnung auf.

Bei einer Abbremsung des Abtriebsstrangs auf eine kleine Drehzahl wird eine beliebige Drehzahl des Antriebsstrangs dadurch ermöglicht, dass die mit einer Untersetzung ausgebildeten Sonnenräder mit vergrößerter Drehzahl in gleicher Richtung mit dem Antriebsstrang rotieren, während die miteinander verbundenen Hohlräder in entgegengesetzter Richtung rotieren. Die Drehzahlen der rotierenden Systeme können dabei deutlich größer als die Drehzahl des Antriebsstrangs sein. Aus konstruktiven Gründen sollte deshalb zur Vermeidung übermäßig großer Drehzahlen eine Optimierung der Übersetzungs- bzw. Untersetzungsverhältnisse und der beteiligten rotierenden Systeme und deren Anpassung an die üblicherweise zu übertragenden Energien vorgenommen werden.

Die durch die Folge von Drehmomentstößen bewirkte Änderung bzw. Erhöhung der Drehenergie des Getriebes wird dabei sowohl auf den Abtriebsstrang als auch auf den Antriebsstrang übertragen, so dass ein Teil der auf das Getriebe übertragenen Drehenergie wieder auf die Wandler-Einrichtung zurückübertragen wird, jedoch zumindest ein weiterer Teil der Drehenergie auf das Schwungrad übertragen und dort gespeichert werden kann.

In besonders vorteilhafter Weise ist vorgesehen, dass die miteinander verbundenen Sonnenräder und/oder die miteinander verbundenen Hohlräder der beiden Planetengetriebe jeweils drehfest mit einer Zusatzmasse verbunden sind. Durch eine geeignete Vorgabe der Zusatzmasse oder der Zusatzmassen kann die Trägheit der rotierenden Elemente mit geringem Aufwand beeinflusst und an die jeweiligen Anforderungen angepasst werden.

Die Zusatzmassen können dazu verwendet werden, die Energieübertragung möglichst effizient zu gestalten. Große Trägheitsmomente der rotierenden Elemente ermöglichen einen großen Energieübertrag pro Drehmomentstoß, verlängern aber die Zeitdauer, die für einen Ausgleich der Stoßwirkung und eine Anpassung der kurzzeitig deutlich veränderten Drehzahlen an die resultierenden Drehzahlen der Abtriebs- und der Antriebswelle erforderlich ist.

Nicht nur bei Fahrzeugen, sondern beispielsweise auch bei dem Betrieb eines Fahrstuhls oder eines Lastenkrans kann eine derartige Vorrichtung vorteilhaft verwendet und zur Zurückgewinnung von Bremsenergie bei dem Abbremsen der Lasten genutzt werden.

Eine konstruktiv einfache und ausschließlich auf mechanischen Wirkprinzipien beruhende Ausgestaltung der Wandler-Einrichtung kann dadurch erreicht werden, dass die Wandler-Einrichtung eine senkrecht zu einem Antriebsstrang des Getriebes angeordnete Drehscheibe mit einer nicht rotationssymmetrischen Umfangskontur aufweist, die mit einem gegen eine Federkraft auslenkbaren Nocken in Eingriff bringbar ist. Die Drehscheibe bildet den nicht rotationssymmetrischen Drehkörper und der gegen eine Federkraft auslenkbare Nocken bildet den Drehmomentänderungskörper, der auf die Drehscheibe, bzw. den nicht rotationssymmetrischen Drehkörper einwirken kann. Die Umfangskontur der Drehscheibe, deren Drehzahl zunächst proportional zu einer Drehzahl der Radachse des Fahrzeugs ist und mit der Drehzahl des Antriebsstrangs des Getriebes übereinstimmt, ist zweckmäßigerweise so ausgestaltet, dass der gegen eine Federkraft auslenkbare Nocken während einer vollständigen Umdrehung der Drehscheibe mindestens einmal und vorzugsweise mehrfach quasi-instantan gegen die Federkraft ausgelenkt und anschließend vergleichsweise langsam wieder in die ursprüngliche Ausgangsposition zurückverlagert wird.

Während die Dauer des Drehmomentstoßes durch die Umfangskontur der Drehscheibe beeinflusst werden kann, hängt der Betrag des über den Nocken auf die Drehscheibe ausgeübten Drehmomentstoßes im Wesentlichen von der Federkraft ab, die auf den Nocken einwirkt. Die Federkraft kann in vorteilhafter Weise vorgegeben bzw. variiert oder während des Betriebs geregelt verändert werden.

Gemäß einer vorteilhaften Ausgestaltung des Erfindungsgedankens ist vorgesehen, dass die Wandler-Einrichtung zwei drehelastisch miteinander verbundene Drehscheiben aufweist. Auf diese Weise kann für die Dauer der von der Wandler-Einrichtung erzeugten Drehmomentstöße eine Entkopplung der Drehzahlen der drehelastisch miteinander verbundenen Drehscheiben und damit der beiden Bereiche des Antriebsstrangs, die der Wandler-Einrichtung bzw. dem Getriebe zugeordnet sind, erreicht werden. Unterschiedliche Drehzahlen bewirken eine relative Verdrehung der beiden Drehscheiben zueinander, wodurch mechanische Energie in der beispielsweise mittels einer Drehfeder erzeugten drehelastischen Verbindung der beiden Drehscheiben gespeichert werden kann. Im Rahmen einer im Anschluss an einen Drehmomentstoß und eine dadurch hervorgerufene kurzzeitige Änderung der Drehzahlen der beiden Drehscheiben werden sich die Drehzahlen auf Grund der drehelastischen Kopplung der Drehscheiben wieder angleichen, wobei die in der drehelastischen Kopplung gespeicherte mechanische Energie in Drehenergie umgewandelt wird, die zum Teil wieder auf die Wandler-Einrichtung zurückübertragen wird, jedoch zum Teil auch auf das mit einer Drehscheibe in Verbindung stehende Getriebe übertragen wird und eine Änderung der Drehenergie des Getriebes bewirkt.

Gemäß einer vorteilhaften Ausgestaltung des Erfindungsgedankens ist vorgesehen, dass die Vorrichtung eine zweite Wandler-Einrichtung zur Umwandlung der Drehenergie des Schwungrads in Antriebsenergie für das Fahrzeug aufweist, die zwischen dem Getriebe und dem Schwungrad angeordnet ist. Die in dem Schwungrad gespeicherte Drehenergie kann über die zweite Wandler-Einrichtung auf das Getriebe und damit auch auf das mit dem Abtriebsstrang des Getriebes in Wirkverbindung stehende Fahrzeug übertragen und in kinetische Energie des Fahrzeugs zurückgewandelt werden. Durch eine wahlweise Aktivierung der ersten oder der zweiten Wandler-Einrichtung kann vorgegeben werden, ob kinetische Energie des Fahrzeugs in mechanische Energie umgewandelt und in dem Schwungrad gespeichert werden soll oder ob in dem Schwungrad gespeicherte Drehenergie über die zweite Wandler-Einrichtung auf das Fahrzeug zurückübertragen und zur Beschleunigung des Fahrzeugs bzw. zur Umwandlung in kinetische Energie verwendet werden soll.

Sofern beide Wandler-Einrichtungen jeweils zwei drehelastisch miteinander verbundene Drehscheiben aufweisen, kann durch die beiden Wandler-Einrichtungen eine vorteilhafte Entkopplung der jeweiligen Drehzahlen während der Einwirkung der aufeinanderfolgenden Drehmomentstöße erreicht werden.

Die betragsmäßigen Anteile der angestrebten Umwandlung von kinetischer Energie bzw. von Bremsenergie in Drehenergie des Schwungrads bzw. der entgegengesetzten Energieumwandlung sind unter anderem von den Trägheitsmomenten der rotierenden Systeme und den Federeigenschaften der verwendeten Federeinrichtungen abhängig. Eine weitere Abhängigkeit besteht in dem Übersetzungsverhältnis der Kraftübertragungswege des Getriebes, wie es beispielsweise durch den jeweiligen Umfang der Planetenräder und der Sonnenräder vorgegeben wird. Die jeweiligen Parameter, die einen Einfluss auf die angestrebte Energieumwandlung und Energieübertragung haben, sollten zweckmäßigerweise sinnvoll aufeinander abgestimmt sein.

Ausgehend von vereinfachenden Annahmen und Näherungen haben Untersuchungen ergeben, dass große Trägheitsmomente der rotierenden Systeme in Verbindung mit eine großen Federsteifigkeit der einzelnen Federeinrichtungen eine vergleichsweise steife Kopplung bewirken, wohingegen kleine Trägheitsmomente in Verbindung mit einer geringen Steifigkeit der verwendeten Federeinrichtungen eine vergleichsweise weiche Kopplung bewirken. Das minimal, bzw. maximal mögliche Übersetzungsverhältnis der verschiedenen Kraftübertragungswege des Getriebes, das nicht unterschritten werden sollte, wird durch die Reibungsverhältnisse zwischen den Zahnrädern der Planetenräder, Sonnenräder und Hohlräder sowie durch die jeweiligen Drehzahlen während des Betriebs maßgeblich bestimmt und vorgegeben.

Nachfolgend werden Ausführungsbeispiele des Erfindungsgedankens näher erläutert, die in der Zeichnung dargestellt sind. Es zeigt:
Fig. 1 eine schematische Darstellung einer erfindungsgemäßen Vorrichtung zur Rückgewinnung von Bremsenergie,
Fig. 2 eine schematische Darstellung einer Seitenansicht einer Wandler-Einrichtung mit zwei drehelastisch miteinander verbundenen Drehscheiben,
Fig. 3 eine Schnittansicht der in Fig. 2 dargestellten Wandler-Einrichtung längs einer Linie III-III,
Fig. 4 eine schematische Schnittansicht eines Getriebes mit zwei miteinander verbundenen Planetengetrieben,
Fig. 5 eine Schnittansicht des in Fig. 4 dargestellten Getriebes längs der Linie V-V und
Fig. 6 eine Schnittansicht des in Fig. 4 abgebildeten Getriebes längs einer Linie VI-VI.

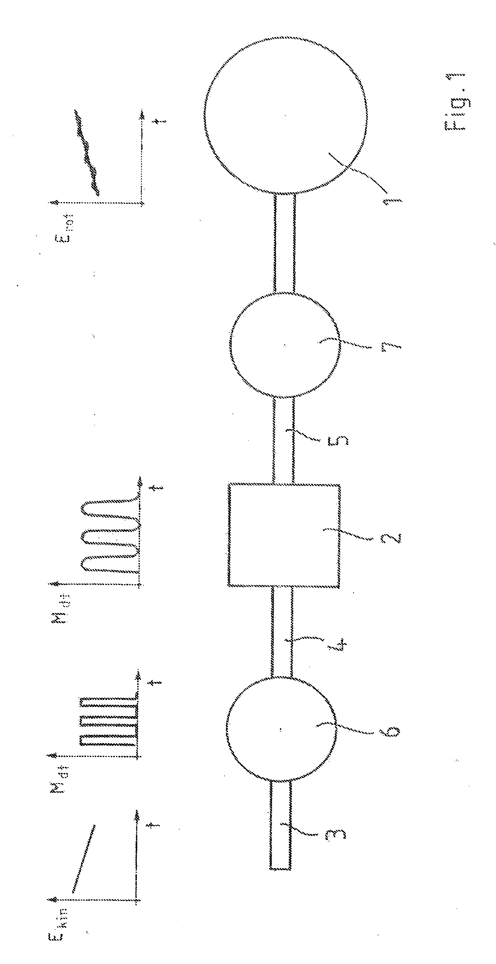

In Fig. 1 ist schematisch eine Vorrichtung zur Rückgewinnung von Bremsenergie abgebildet, die als mechanischen Energiespeicher ein Schwungrad 1 aufweist. Das Schwungrad 1 ist über ein Getriebe 2 mit einer Antriebswelle 3 oder mit einer Radachse eines nicht dargestellten Fahrzeugs verbunden. In dem in Fig. 1 schematisch dargestellten Ausführungsbeispiel ist eine Antriebswelle 4 des Getriebes 2 mit der Antriebswelle 3 des Fahrzeugs verbunden, während eine Abtriebswelle 5 des Getriebes mit dem Schwungrad 1 verbunden ist. Dabei wird als Verbindung jedwede geeignete Wirkverbindung angesehen, so dass nicht notwendigerweise eine Beschränkung auf starre Verbindungen und gleiche Drehzahlen der Antriebswelle 4 des Getriebes 2 und der Antriebswelle 3 des Fahrzeugs sowie der Abtriebswelle 5 des Getriebes 2 und dem Schwungrad 1 angenommen bzw. vorgegeben werden müssen.

Zwischen der Antriebswelle 3 des Fahrzeugs und dem Getriebe 2 ist eine erste Wandler-Einrichtung 6 angeordnet. Zwischen dem Getriebe 2 und dem Schwungrad 1 ist eine zweite Wandler-Einrichtung 7 angeordnet.

Durch die erste Wandler-Einrichtung 6 wird ein Anteil einer abnehmenden kinetischen Energie Eₖᵢₙ des Fahrzeugs in eine Folge von Drehmomentstößen Mdt mit im Wesentlichen gleichbleibenden Eigenschaften umgewandelt. Die Drehmomentstöße Mdt wirken auf das Getriebe 2 und bewirken eine Änderung der Drehenergie Eᵣₒₜ und eine damit einhergehende Änderung der Drehzahlen der rotierenden Getriebeelemente. Da das Getriebe 2 sowohl mit der Antriebswelle 3 des Fahrzeugs als auch mit dem Schwungrad 1 in Wirkverbindung steht, werden sich die Drehzahlen der rotierenden Getriebeelemente in Abhängigkeit von den Drehzahlen der Antriebswelle 3 und des Schwungrads 1 anpassen bzw. angleichen und zumindest ein Teil der auf das Getriebe 2 übertragenen Drehenergie Eᵣₒₜ über die Wandler-Einrichtung 7 auf das Schwungrad 1 übertragen, dessen Drehenergie Eᵣₒₜ zunimmt und dessen Drehzahl sich entsprechend erhöht.

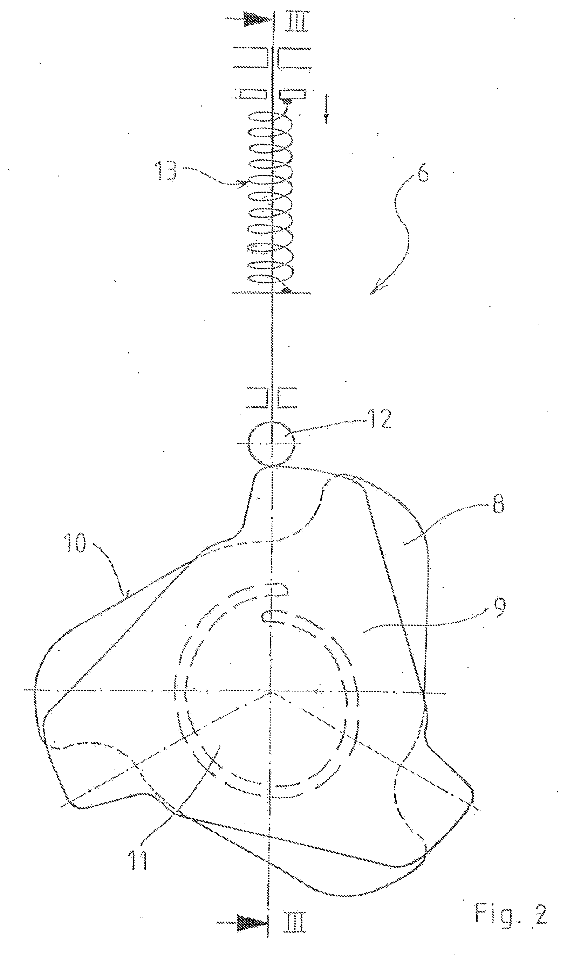

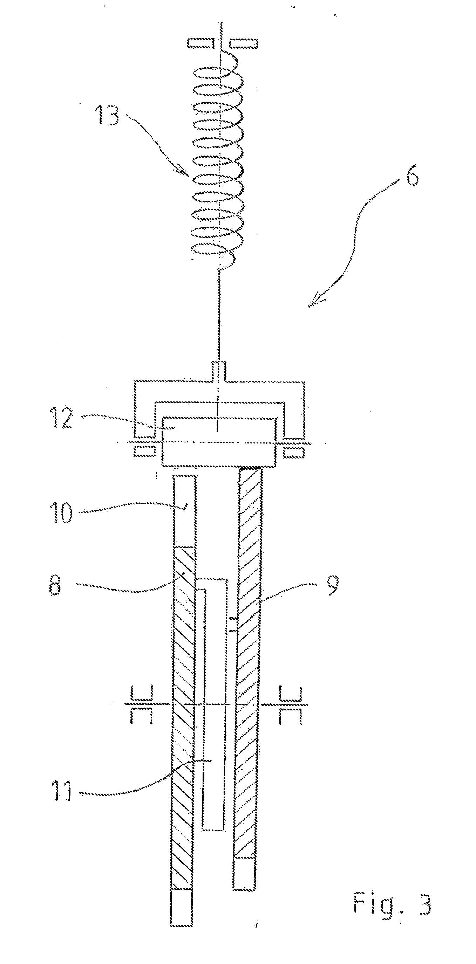

In Fig. 2 und 3 ist lediglich beispielhaft eine erste Wandler-Einrichtung 6 dargestellt. Die zweite Wandler-Einrichtung 7 ist üblicherweise identisch ausgestaltet. Die Wandler-Einrichtung 6 weist eine erste Drehscheibe 8 und eine zweite Drehscheibe 9 auf, die jeweils eine nicht rotationssymmetrische Umfangskontur 10 aufweisen. Die beiden Drehscheiben 8, 9 sind in einem Winkel relativ zueinander verdreht angeordnet. Zwischen den beiden Drehscheiben 8, 9 ist eine näherungsweise kreisbogenförmig gekrümmte Drehfeder 11 angeordnet, die eine drehelastische Kopplung der beiden Drehscheiben 8, 9 bewirkt.

Wird die Wandler-Einrichtung 6 aktiviert, so werden die Umfangskonturen 10 der beiden Drehscheiben 8, 9 von einem walzenförmigen, an beiden Drehscheiben 8, 9 anliegenden Nocken 12 abgetastet. Der Nocken 12 wird dabei periodisch entgegen einer Federkraft einer Federeinrichtung 13, die zur Veranschaulichung als Schraubenfeder dargestellt ist, in Abhängigkeit von den gleichzeitig abgegriffenen Umfangskonturen 10 der beiden Drehscheiben 8, 9 ausgelenkt. Der Nocken 12 ist dabei ausreichend breit, um gleichzeitig beide Drehscheiben 8, 9 abzutasten, so dass die Auslenkung des Nockens 12 jeweils durch die radial weiter außenliegende Kontur der beiden Drehscheiben 8, 9 vorgegeben wird.

Bei dem lediglich exemplarisch dargestellten Ausführungsbeispiel hat die vorauseilende erste Drehscheibe 8 die Aufgabe, den Nocken 12 gegen die Federkraft der Federeinrichtung 13 nach außen zu drücken. Das geschieht während einer vollständigen Umdrehung der Drehscheibe 8 dreimal. Kurz nachdem der Nocken 12 nicht mehr an einem vorspringenden Bereich der Umfangskontur 10 der ersten Drehscheibe 8, sondern an der Umfangskontur 10 der zweiten Drehscheibe 9 anliegt, kann der Nocken 12 auf Grund einer steil abfallenden Flanke der Umfangskontur der zweiten Drehscheibe einen durch die Federkraft verursachten Drehstoß auf die zweite Drehscheibe 9 ausüben, wodurch eine Verdrehung der zweiten Drehscheibe 9 relativ zu der ersten Drehscheibe 8 bewirkt wird. Dadurch wird ein Drehstoß auf das Getriebe 2 ausgeübt. Auf diese Weise wird auch die Drehfeder 11 entgegen ihrer Rückstellkraft verdreht und mechanische Energie in der drehelastischen Verbindung der beiden Drehscheiben 8, 9 gespeichert. Anschließend bewirkt die Drehfeder 11 eine entgegengesetzte Beschleunigung der zweiten Drehscheibe 9 relativ zu der Drehscheibe 8 und eine Angleichung der Drehzahlen der beiden Drehscheiben 8, 9 bzw. eine Rückkehr der zweiten Drehscheibe 9 in eine Ausgangsposition relativ zu der ersten Drehscheibe 8.

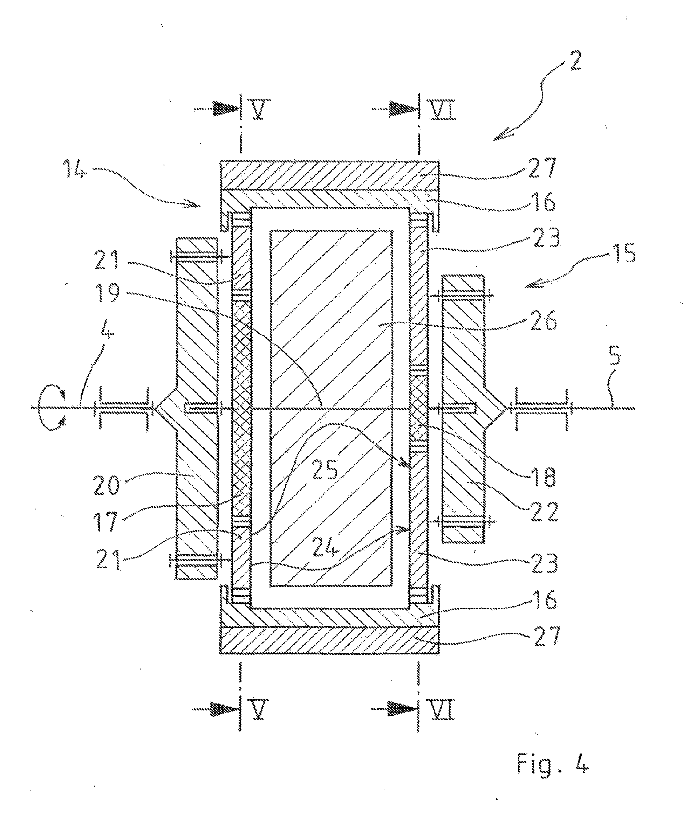

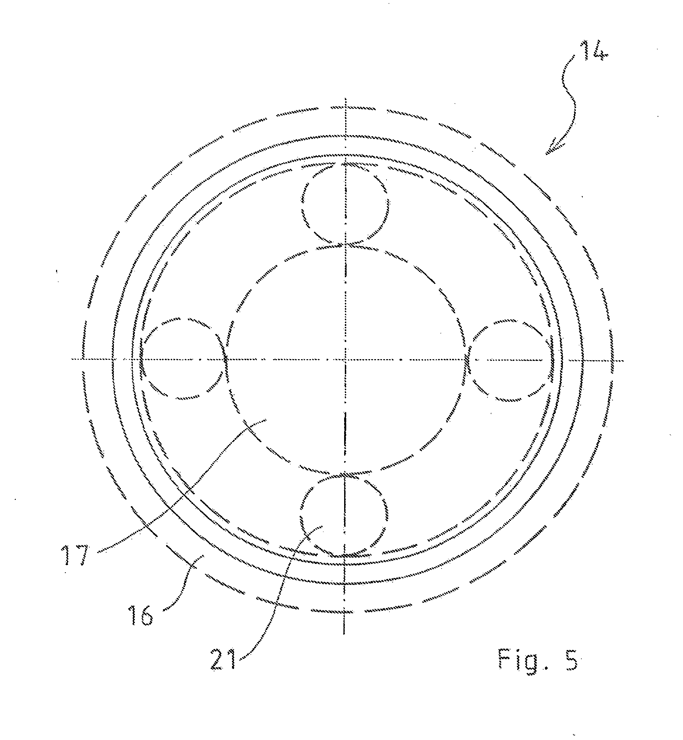

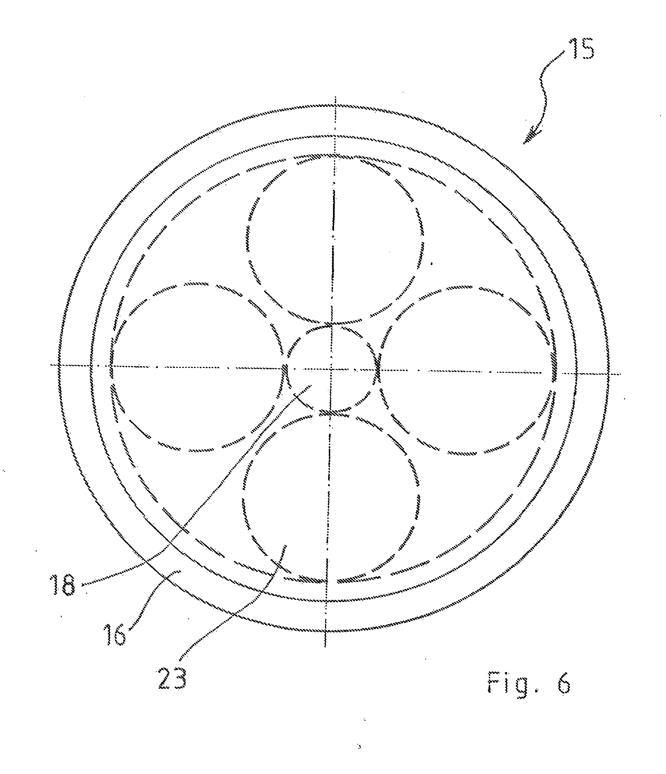

Die auf diese Weise erzeugten Drehmomentstöße werden von der ersten Wandler-Einrichtung 6 auf das Getriebe 2 übertragen. Das Getriebe 2, wie es in den Fig. 4-6 exemplarisch dargestellt ist, weist zwei miteinander verbundene Planetengetriebe 14, 15 auf. Die beiden Planetengetriebe 14, 15 weisen ein gemeinsames Hohlrad 16 auf. Die beiden Sonnenräder 17, 18 der Planetengetriebe 14, 15 sind über eine gemeinsame Mittelachse 19 drehfest miteinander verbunden. Die Antriebswelle 4 ist über einen Planetensteg 20 mit den Planetenrädern 21 des Planetengetriebes 14, das der Antriebswelle 4 zugeordnet ist, verbunden. In gleicher Weise ist die Abtriebswelle 5 des Getriebes 2 über einen Planetensteg 22 mit den Planetenrädern 23 des Planetengetriebes 15 verbunden, das der Abtriebswelle 5 zugeordnet ist. Die Planetenräder 21 und die Planetenräder 23 sowie die jeweils zugeordneten Sonnenräder 17 und 18 weisen einen voneinander abweichenden Umfang auf. Die schematisch durch die beiden Pfeile 24 und 25 angedeuteten Kraftübertragungswege in dem Getriebe 2 weisen demzufolge ein unterschiedliches Übersetzungsverhältnis auf. Dies führt dazu, dass eine weitgehende Entkopplung der Drehzahlen der mit dem Fahrzeug in Verbindung stehenden Antriebswelle 4 und der mit dem Schwungrad 1 in Wirkverbindung stehenden Abtriebswelle 5 des Getriebes 2 und gleichzeitig eine effiziente Übertragung der Bremsenergie in Drehenergie des Schwungrads 1 und umgekehrt ermöglicht wird.

Durch zusätzliche Massen 26 und 27, die im Inneren des gemeinsamen Hohlrads 16 drehfest mit den Sonnenrädern 17, 18 sowie außerhalb des gemeinsamen Hohlrads 16 mit dieser drehfest verbunden sind, können in geeigneter Weise die Trägheitsmomente der rotierenden Elemente der Planetengetriebe 14 und 15 verändert und damit ebenso wie mit einer Vorgabe der Federkräfte letztendlich Einfluss auf die Energieumwandlung und Übertragung auf das Schwungrad 1 genommen werden.

## Patentansprüche

1. Vorrichtung zur Zurückgewinnung von Bremsenergie während des Abbremsens einer in Bewegung befindlichen trägen Masse, um die Bremsenergie mindestens teilweise in mechanische Energie umzuwandeln und zu speichern, mit einem Schwungrad, welches über ein Getriebe mit der trägen Masse in Wirkverbindung steht, **dadurch gekennzeichnet, dass** das Getriebe (2) zwei Planetengetriebe (14, 15) aufweist, die drehfest miteinander verbundene Sonnenräder (17, 18) und drehfest miteinander verbundene Hohlräder (16) und einen voneinander abweichenden Umfang der jeweiligen Planetenräder (21, 23) aufweisen, und dass die Vorrichtung eine zwischen der trägen Masse und dem Getriebe (2) angeordnete Wandler-Einrichtung (6) zur Umwandlung einer Bremsenergie in eine Drehmomentfolge aufweist, wobei die Wandler-Einrichtung (6) einen nicht rotationssymmetrischen Drehkörper aufweist, der mit einem senkrecht zu einer Drehachse des Drehkörpers auslenkbaren Drehmomentänderungskörper in Wirkverbindung bringbar ist, und wobei die Wandler-Einrichtung (6) mit dem Getriebe (2) in Wirkverbindung steht und dessen Drehenergie verändern kann, um die Änderung der Drehenergie des Getriebes (2) mindestens teilweise auf das Schwungrad (1) zu übertragen und eine Änderung der in dem Schwungrad (1) gespeicherten Drehenergie zu bewirken.

2. Vorrichtung nach Anspruch 1, **dadurch gekennzeichnet, dass** die beiden Planetengetriebe (14, 15) ein gemeinsames Hohlrad (16) aufweisen.

3. Vorrichtung nach Anspruch 1 oder 2, **dadurch gekennzeichnet, dass** die miteinander verbundenen Sonnenräder (17, 18) und/oder die miteinander verbundenen Hohlräder (16) jeweils drehfest mit einer Zusatzmasse verbunden sind.

4. Vorrichtung nach einem der vorangehenden Ansprüche, **dadurch gekennzeichnet, dass** die Wandler-Einrichtung (6) eine senkrecht zu einem Antriebsstrang (4) des Getriebes (2) angeordnete Drehscheibe (8) mit einer nicht rotationssymmetrischen Umfangskontur (10) aufweist, die mit einem gegen eine Federkraft auslenkbaren Nocken (12) in Eingriff bringbar ist.

5. Vorrichtung nach Anspruch 3, **dadurch gekennzeichnet, dass** die Wandler-Einrichtung (6) zwei drehelastisch miteinander verbundene Drehscheiben (8, 9) aufweist.

6. Vorrichtung nach einem der vorangehenden Ansprüche, **dadurch gekennzeichnet, dass** die Vorrichtung eine zweite Wandler-Einrichtung (7) zur Umwandlung der Drehenergie des Schwungrads (1) in Antriebsenergie für das Fahrzeug aufweist, die zwischen dem Getriebe (2) und dem Schwungrad (1) angeordnet ist.

## Claims

1. Apparatus for recovering braking energy during the braking of an inert mass which is in motion, in order to convert the braking energy at least partially into mechanical energy and to store it, having a flywheel which is operatively connected via a gear mechanism to the inert mass, **characterized in that** the gear mechanism (2) has two planetary gear mechanisms (14, 15) which have sun gears (17, 18) which are connected fixedly to one another so as to rotate together and internal gears (16) which are connected fixedly to one another so as to rotate together and a circumference of the respective planetary gears (21, 23) which differs from one another, and **in that** the apparatus has a converter device (6) which is arranged between the inert mass and the gear mechanism (2) for the conversion of braking energy into a torque sequence, the converter device (6) having a non-rotationally symmetrical rotary body which can be brought into an operative connection with a torque changing body which can be deflected perpendicularly with respect to a rotational axis of the rotary body, and the converter device (6) being operatively connected to the gear mechanism (2) and being capable of changing its rotational energy, in order to transmit the change in the rotational energy of the gear mechanism (2) at least partially to the flywheel (1) and to bring about a change in the rotational energy which is stored in the flywheel (1).

2. Apparatus according to Claim 1, **characterized in that** the two planetary gear mechanisms (14, 15) have a common internal gear (16).

3. Apparatus according to Claim 1 or 2, **characterized in that** the sun gears (17, 18) which are connected to one another and/or the internal gears (16) which are connected to one another are connected in each case fixedly to an additional mass so as to rotate with it.

4. Apparatus according to one of the preceding claims, **characterized in that** the converter device (6) has a rotary disc (8) which is arranged perpendicularly with respect to a drive train (4) of the gear mechanism (2) and has a non-rotationally symmetrical circumferential contour (10) which can be brought into engagement with a cam (12) which can be deflected counter to a spring force.

5. Apparatus according to Claim 3, **characterized in that** the converter device (6) has two rotary discs (8, 9) which are connected to one another in a rotationally elastic manner.

6. Apparatus according to one of the preceding claims, **characterized in that** the apparatus has a second converter device (7) for the conversion of the rotational energy of the flywheel (1) into drive energy for the vehicle, which second converter device (7) is arranged between the gear mechanism (2) and the flywheel (1).

## Revendications

1. Dispositif de récupération d'énergie de freinage pendant le freinage d'une masse inerte en mouvement afin de convertir au moins en partie l'énergie de freinage en énergie mécanique et de la stocker, comprenant un volant d'inertie qui est en liaison fonctionnelle par le biais d'une transmission avec la masse inerte, **caractérisé en ce que** la transmission (2) présente deux engrenages planétaires (14, 15) qui présentent des roues solaires (17, 18) connectées de manière solidaire en rotation l'une à l'autre et des couronnes (16) connectées de manière solidaire en rotation l'une à l'autre et une périphérie s'écartant l'une de l'autre des pinions planétaires respectifs (21, 23), et **en ce que** le dispositif présente un dispositif convertisseur (6) disposé entre la masse inerte et la transmission (2) pour convertir une énergie de freinage en une succession de couples, le dispositif convertisseur (6) présentant un corps rotatif sans symétrie de révolution, lequel peut être amené en liaison fonctionnelle avec un corps de variation de couple pouvant être dévié perpendiculairement à un axe de rotation du corps rotatif, et le dispositif convertisseur (6) étant en liaison fonctionnelle avec la transmission (2) et pouvant modifier son énergie de rotation afin de transmettre la variation d'énergie de rotation de la transmission (2) au moins en partie au volant d'inertie (1) et de provoquer une variation de l'énergie de rotation stockée dans le volant d'inertie (1).

2. Dispositif selon la revendication 1, **caractérisé en ce que** les deux engrenages planétaires (14, 15) présentent une couronne commune (16).

3. Dispositif selon la revendication 1 ou 2, **caractérisé en ce que** les roues solaires (17, 18) connectées l'une à l'autre et/ou les couronnes (16) connectées l'une à l'autre sont à chaque fois connectées de manière solidaire en rotation à une masse supplémentaire.

4. Dispositif selon l'une quelconque des revendications précédentes, **caractérisé en ce que** le dispositif convertisseur (6) présente un disque rotatif (8) disposé perpendiculairement à une chaîne cinématique (4) de la transmission (2) avec un contour périphérique (10) sans symétrie de révolution, lequel peut être amené en prise avec une came (12) pouvant être déviée à l'encontre d'une force de ressort.

5. Dispositif selon la revendication 3, **caractérisé en ce que** le dispositif convertisseur (6) présente deux disques rotatifs (8, 9) connectés de manière élastiquement rotative l'un à l'autre.

6. Dispositif selon l'une quelconque des revendications précédentes, **caractérisé en ce que** le dispositif présente un deuxième dispositif convertisseur (7) pour convertir l'énergie de rotation du volant d'inertie (1) en énergie d'entraînement pour le véhicule, lequel est disposé entre la transmission (2) et le volant d'inertie (1).
